# EUROPÄISCHE PATENTSCHRIFT

(11) **EP 1 914 462 B1**
(45) Veröffentlichungstag und Bekanntmachung des Hinweises auf die Patenterteilung: **01.10.2014**
(21) Anmeldenummer: 07020216.3
(22) Anmeldetag: 16.10.2007
(51) Int. Cl.: F16L 13/02, F16L 47/02

(54) **Mehrschichtiges Kunststoffrohr**
Multi-layer plastic pipe
Tuyau en plastique multicouche

(30) Priorität: 19.10.2006 DE 102006049338
(43) Veröffentlichungstag der Anmeldung: 23.04.2008
(73) Patentinhaber: Egeplast Werner Strumann GmbH & Co. KG, 48268 Greven (DE)
(72) Erfinder: Wolter, Ralf, 48477 Hörstel (DE); Späth, Thorsten, Dr., 48282 Emsdetten (DE)
(74) Vertreter: Fritz, Edmund Lothar

(56) Entgegenhaltungen:
- EP-A1- 0 804 699
- WO-A1-93/00212
- DD-A1- 279 052
- DE-A1- 10 249 454

## Beschreibung

Die vorliegende Erfindung betrifft ein mehrschichtiges Kunststoffrohr umfassend mindestens eine Kernschicht und mindestens eine Deckschicht, welche dazu bestimmt ist, bei Bedarf in einem Schälvorgang von der mindestens einen Kernschicht entfernt zu werden, wobei mindestens eine Deckschicht wenigstens einen achsparallel ausgerichteten oder spiralförmig um die Rohrachse in Umfangsrichtung verlaufenden Sollbruchbereich aufweist, der ein Abschälen der mindestens einen Deckschicht ermöglicht.

Aus der EP 0804 699 B 1 ist ein mehrschichtiges Kunststoffrohr bekannt geworden. Kunststoffrohre dieser Art dienen insbesondere für den Transport flüssiger oder gasförmiger Medien. Beispielsweise handelt es sich um Rohre für Trinkwasser, Gasrohre, Abwasserrohre oder dergleichen. Bei Kunststoffrohren dieses Typs dient die Kernschicht in der Regel dazu, die geforderten mechanischen Eigenschaften des Rohrs, wie beispielsweise die Druckfestigkeit, zu gewährleisten. Die Deckschicht (äußere Schicht) dient vornehmlich dazu, die Kernschicht zu schützen, insbesondere gegen Verschmutzung und den Einfluss von UV-Strahlung.

Die Verbindung zweier Rohrenden von Kunststoffrohren des genannten Typs geschieht in der Praxis meist dadurch, dass die Rohrenden jeweils über Kupplungsstücke verbunden werden, wobei die Rohrenden beispielsweise mit diesen Kupplungsstücken elektrisch verschweißt werden. Sofern die Rohrenden in den Verbindungsbereichen Verschmutzungsreste aufweisen oder oxidiert sind, ist es nicht möglich, eine effektive, dauerhaft dichte Schweißverbindung zu erhalten, die den Anforderungen genügt. Aus diesem Grunde ist man dazu übergegangen, die Rohre mit einer Schutzschicht zu versehen, die die Kernschicht umhüllt, auf letzterer aber nur eine vergleichsweise geringe Haftung aufweist, so dass es möglich ist, vor einem Schweißvorgang die Deckschicht quasi durch Abschälen zu entfernen.

Ein bekanntes Verfahren zur Herstellung mehrschichtiger Rohre aus Kunststoff dieses Typs umfasst deren Coextrusion. Dabei werden zwei oder mehrere Schichten des Verbunds gleichzeitig unter Verwendung eines Werkzeugs mit doppeltem Ringspalt extrudiert, so dass beide Rohrschichten im Zustand der Schmelze miteinander einen Verbund eingehen. Bei Verwendung dieser Herstellungsmethode kann zwar ein fester Verbund der beiden coextrudierten Schichten erzielt werden, was aber, da sich die Grenzschichten von Kernschicht und Deckschicht bereits im heißen geschmolzenen Zustand miteinander verbinden, den Nachteil hat, dass es Schwierigkeiten bereiten kann, später bei der Vorbereitung des Schweißvorgangs, die Deckschicht von der Kernschicht durch einen Schälvorgang zu entfernen.

Um diesem Problem zu begegnen, wurden im Stand der Technik bereits verschiedene Lösungsansätze verfolgt. In der WO 2004/016420 wird beispielsweise vorgeschlagen, dem Kunststoff der Deckschicht ein die Adhäsion der Deckschicht zur Kernschicht modifizierendes Additiv zuzusetzen.

Für den zuvor geschilderten Anwendungszweck ergibt sich die Anforderung, ein Kunststoffrohr mit mindestens einer Kernschicht und mindestens einer diese Kernschicht umhüllenden Deckschicht zu schaffen, bei dem zunächst für Zwecke der Lagerung, des Transports etc. die Deckschicht eine ausreichende Haftung auf der Kernschicht aufweist, so dass die Deckschicht während dieser Zeit ihre Schutzfunktion gegenüber der Kernschicht erfüllt, wobei Kernschicht und Deckschicht ein einheitliches Verbundrohr bilden und wobei Kernschicht und Deckschicht aus verschiedenen Kunststoffen mit unterschiedlichen Materialeigenschaften bestehen können. Andererseits soll jedoch die Adhäsion der Deckschicht zur Kernschicht nur so groß sein, dass sich die Deckschicht bei Bedarf vor einem Schweißvorgang durch Abschälen problemlos entfernen lässt.

Die DE 103 13 304 B 3 beschreibt ein Verfahren mittels dessen man Kunststoffrohre abtrennen oder ablängen kann. Anstelle der herkömmlichen Methoden zur Abtrennung mittels Säge, Messer oder anderer Werkzeuge wird ein Rohrelement aus Kunststoff vorgeschlagen, bei dem der Außenbereich der Wandung mit Kerben versehen ist, welche einen nach außen abreißbaren Trennstreifen ausbilden. An dem Trennstreifen ist ein Handhabungselement befestigt, so dass es möglich ist, durch Angreifen an dem Hiandhabungselement den Trennstreifen herauszuziehen. Diese in dieser Druckschrift beschriebene Methode beschränkt sich auf die Abtrennung eines Rohrabschnitts in Richtung quer zur Rohrachse. Es ist dabei vorgesehen, ein Kunststoffrohr mit einschichtiger Rohrwandung vollständig zu durchtrennen. Die Problematik der Abtrennung einer Deckschicht eines mehrschichtigen Rohrs durch einen Schälvorgang wird in dieser Druckschrift nicht angesprochen. Nachteilig ist weiterhin, dass sich derart ausgebildete Rohrelemente aufgrund der an den Trennstreifen angebrachten Kerben und der damit verbundenen Schwächung der Rohrwandung in der Regel nicht für Rohre eignen, die unter Druck stehende Medien enthalten.

In der DE 197 41 035 C 1 ist ein Sanitär- oder Heizungsrohr beschrieben, welches zur Verwendung im Bereich der Hausinstallation im Inneren von Gebäuden bestimmt ist und mindestens eine innenliegende Kunststoffschicht sowie eine außenliegende Flammschutzschicht aufweist. Ausserdem ist zwischen der Kunststoffschicht und der Flammschutzschicht eine Trennmittelschicht angeordnet. Um zu ermöglichen, dass das Rohrende mit einem Fitting verbunden werden kann, muss die Flammschutzschicht örtlich entfernt werden. Die Trennmittelschicht liegt als extrem dünne Folie im Submillimeterbereich vor. Die Flammschutzschicht lässt sich nur aufgrund des Vorhandenseins der Trennmittelschicht von der innenliegenden Kunststoffschicht entfernen, nachdem man die Flammschutzschicht eingeritzt hat. Um das Aufreißen der Flammschutzschicht zu erleichtern kann auch ein Aufreißfaden zwischen der Kunststoffschicht und der Trennmittelschicht oder der Trennmittelschicht und der Flammschutzschicht angeordnet sein.

Die DE 102 49 454 A 1 beschreibt ein isoliertes Leitungsrohr für den Einsatz in Sanitär- und Heizungsanlagen, bei dem zum Verbinden einzelner Rohrenden ein rückstandsfreies Entfernen des Kunststoffaußenrohres ohne Beeinträchtigung des mediumfuhrenden Innenrohres angestrebt wird. Dabei besteht das Innenrohr aus Kupfer und zwischen diesem und dem Kunststoffaußenrohr ist eine spröde ausgebildete Trennschicht angeordnet. Zum Entfernen der Isolierung wird mit einem Messer das Kunststoffaußenrohr spiralförmig bis zur Trennschicht angeschnitten. Da dabei auch die Trennschicht eingeschnitten wird, bricht die Trennschicht durch Sprödbruch auf und wird vom Innenrohr abgelöst. Auch bei dieser Lösung ist die Trennschicht funktionswesentlich. Zudem wird keine Sollbruchlinie oder Schwächung herstellerseitig in die Außenwandung aus Kunststoff eingebracht, sondern es wird erst bei Bedarf vor Ort an der Baustelle von Hand mit einem Messer die Außenwandung eingeritzt. Dies ist eine individuelle handwerkliche Vorgehensweise, die jedoch kein industriell in Serie gefertigtes Rohr mit herstellerseits vorgesehenem Sollbruchbereich liefert.

In der WO 93/00212 A1 ist ein Kunststoffrohr mit den Merkmalen der eingangs genannten Gattung bekannt geworden, bei dem eine Deckschicht aus Kunststoff durch Coextrusion auf die Kernschicht aufgebracht wird. Durch besondere Maßnahmen bei der Coextrusion wird entweder eine spiralförmige Naht oder eine Längsnaht in die Deckschicht eingebracht. Dabei lässt man entweder das Werkzeug rotieren oder man kühlt das Coextrusionswerkzeug lokal, um eine Nacht in der Deckschicht zu schaffen, die als Solbruchbereich für das spätere Abschälen der Deckschicht dient. Bei diesem bekannten Kunststoffrohr ist es somit erforderlich, dass die Herstellung des Rohrs mit Kernschicht und Deckschicht in einem Arbeitsgang durch Coextrusion erfolgt.

Die WO 93/00212 A1 offenbart ein Mehrschichtiges kunststoffrohr mit den Merkmalen des Oberbegriffs des Anspruchs 1.

Ausgehend von dem zuvor zitierten Stand der Technik besteht die Aufgabe der vorliegenden Erfindung darin, ein industriell vorgefertigtes mehrschichtiges Kunststoffrohr umfassend mindestens eine Kernschicht und mindestens eine Deckschicht zur Verfügung zu stellen, welches so ausgebildet ist, dass sich die Deckschicht bei Bedarf mindestens bereichsweise mit geringerem Aufwand von der Kernschicht abschälen lässt, wenn die Deckschicht nachträglich durch Aufextrudieren aufgebracht ist.

Die Lösung dieser Aufgabe liefert ein mehrschichtiges Kunststoffrohr der eingangs genannten Gattung mit den kennzeichnenden Merkmalen des Hauptanspruchs. Es ist vorgesehen, dass mindestens eine Deckschicht wenigstens einen achsparallel ausgerichteten oder spiralförmig um die Rohrachse in Umfangsrichtung verlaufenden Sollbruchbereich aufweist, der ein Abschälen der mindestens einen Deckschicht ermöglicht.

Ein Vorteil der erfindungsgemäßen Lösung besteht darin, dass das Kunststoffrohr ohne eine Trennschicht auskommt. Ein weiterer Vorteil liegt darin, dass der Vorgang des Abschälens an der Baustelle nicht erst vom Anwender verlangt, dass dieser das Rohr mit einem Messer oder dergleichen einritzt, um zunächst eine Bruchlinie zu schaffen. Diese bekannte Vorgehensweise könnte auch gegebenenfalls zu Ungenauigkeiten bei der Schaffung einer Sollbruchlinie von Hand führen. Ausserdem ist die vorliegende Erfindung überwiegend bei Kunststoffrohren anwendbar, die für den Outdoor-Bereich vorgesehen sind, das heißt solche, die im Außengelände in Gräben oder auch grabenlos verlegt werden. Solche Kunststoffrohre weisen in der Regel schon um den mechanischen Anforderungen zu genügen entspechend harte äußere Schichten aus Kunststoff auf, die zudem meist glatt sind, während die vorgenannten Rohre aus dem Heizungs- oder Sanitärbereich weiche äußere Umhüllungen haben, die zu Isolierzwecken dienen. Derartige harte Schichten lassen sich nicht in arbeitsökonomischer Form mit einem Messer von Hand einritzen, um ein anschließendes Abschälen zu ermöglichen.

Ein wichtiger Aspekt der erfindungsgemäßen Lösung besteht darin, dass die Möglichkeit, die Deckschicht durch einen Schälvorgang von der Kernschicht zu entfernen, anders als in dem zuvor genannten Stand der Technik nicht durch eine Modifizierung der Materialeigenschaften von Kernschicht und/oder Deckschicht erzielt wird, um so die Adhäsion der Deckschicht zur Kernschicht zu beeinflussen, sondern die Aufgabenlösung wird im wesentlichen auf mechanischem Wege erzielt. Dies hat den Vorteil, dass für Deckschicht und Kernschicht die für den jeweiligen Anwendungsbereich der Kunststoffrohre hinsichtlich ihrer Eigenschaften optimalen Polymere verwendet werden können und diese Eigenschaften nicht durch den Zusatz von Additiven verändert werden. Die Haftung der Deckschicht, oder bei Verwendung mehrerer Deckschichten der innersten Deckschicht, auf der Kernschicht, kann so eingestellt werden, dass die Deckschicht über den gesamten Zeitraum bis zum Vorgang des Abschälens auf der Kernschicht in ausreichendem Maße haftet, sich aber dennoch in dem für einen Verbindungsvorgang durch Schweißen vorgesehenen Schälbereich die Deckschicht mühelos von der Kernschicht abschälen lässt. Nach diesem Abschälvorgang wird dann in diesem Schälbereich eine Kernschicht erhalten, deren Oberfläche frei von jeglicher Verschmutzung ist, so dass der anschließende Schweißvorgang nicht beeinträchtigt wird.

Es ist bevorzugt vorgesehen, dass der Sollbruchbereich eine achsparallel (in Längsrichtung des Rohrs) oder spiralförmig verlaufende Sollbruchlinie (Sollbruchnaht) umfasst. Bei der erstgenannten Variante lässt sich später die Deckschicht in Längsrichtung des Rohrs aufreißen und durch Abschälen in Umfangsrichtung von der Kernschicht entfernen. Bei der zweiten Variante wird die Deckschicht entlang einer spiralförmigen Linie aufgerissen und in einer entsprechenden Bewegung quasi spiralförmig von der Kernschicht abgewickelt.

Erfindungsgemäß umfasst der Sollbruchbereich eine Perforation der mindestens einen Deckschicht. Alternativ dazu kommt auch eine Lochung in Betracht, was bedeutet, dass die Deckschicht oder die Deckschichten in diesen lokalen Bereichen nicht vollständig durchtrennt sind. Man kann beispielsweise eine Perforation der Deckschicht entlang einer gewünschten Sollbruchlinie vorsehen, um so eine Trennnaht entlang dieser Linie vorzugeben, entlang derer die Deckschicht aufreißt, wenn eine entsprechende Zugkraft einwirkt. In der Folge lässt sich dann die Deckschicht in einem Schälvorgang von der Kernschicht abziehen. Perforation bedeutet, dass sich geschwächte Bereiche oder auch bereits durchtrennte Bereiche mit intakten Bereichen der Deckschicht abwechseln, wodurch dann die Sollbruchlinie (Trennlinie) definiert wird.

Das Anbringen der Schwächung oder Lochung kann im Herstellungsprozess beispielsweise dadurch erfolgen, dass man mit einem Lochrad im noch warmen Zustand des Kunststoffs geschwächte Bereiche (Vertiefungen) oder Löcher jeweils in Abständen zueinander in die Deckschicht einbringt.

Eine mögliche bevorzugte Weiterbildung der Erfindung sieht vor, dass mindestens ein Trennelement vorhanden ist, welches als Hilfsmittel für eine erleichterte Entfernung der mindestens einen Deckschicht dient. Als ein solches Trennelement kann zum Beispiel ein Faden dienen, der mindestens teilweise in der Rohrwandung aufgenommen ist. Ein derartiger Faden kann in Längsrichtung des Rohrs verlaufen oder auch beispielsweise spiralförmig. Zur Einbringung des Fadens in die Rohrwandung kann man zum Beispiel so vorgehen, dass man zunächst die Kernschicht des Rohrs extrudiert, dann den Faden auf diese Kernschicht aufwickelt und anschließend die Deckschicht auf die Kernschicht aufextrudiert, so dass danach der Faden unter oder in der Deckschicht liegt. Wenn man die Deckschicht später abschälen möchte, genügt es in der Regel, ein Ende des Fadens freizulegen, wonach man dann an dem Faden angreifen kann und durch ziehen die Deckschicht entlang der Sollbruchnaht aufreißen kann. Um den Faden, der als Trennelement dient, sichtbar zu machen, kann man beispielsweise die Deckschicht oder einen Bereich der Deckschicht transparent ausbilden.

Unabhängig davon, ob man ein Trennelement wie zum Beispiel den genannten Faden vorsieht, ist es erfindungsgemäß von Vorteil, zunächst in einem ersten Extrusionsvorgang die Kernschicht herzustellen und in einem späteren separaten Schritt die Deckschicht auf die bereits erkaltete Kernschicht aufzuextrudieren. Bei dieser Vorgehensweise verbinden sich die beiden Schichten in den Grenzflächenbereichen nicht in der Form wie bei einer gleichzeitigen Herstellung beider Schichten durch Coextrusion, so dass bereits aufgrund der geringeren Adhäsionskräfte ein besseres Abschälen der Deckschicht möglich ist.

Bei einem erfindungsgemäßen zweischichtigen Kunststoffrohr dient die Deckschicht in erster Linie als Schutzschicht gegen Verschmutzung und auch als UV-Schutzschicht für die Kernschicht. Vor einem Schweißvorgang im Rohrendbereich muss die Deckschicht entfernt werden. Rohrabschnitte von Rohren dieses Typs werden in der Regel elektrisch miteinander verschweißt, zum Beispiel durch Heizwendelschweißen oder andere übliche Methoden. Um den Zeitaufwand beim Schweißen zu reduzieren, ist es von Bedeutung, dass sich die Deckschicht von der Kernschicht gut löst und somit rasch und problemlos abschälen lässt. Wenn man einen Faden als Trennelement verwendet, kann es vorteilhaft sein, wenn das Kunststoffrohr stirnseitig wenigstens eine Fase aufweist. Diese Fase kann man zum Beispiel anbringen, wenn man das Rohr mit einem speziellen Trennwerkzeug durchtrennt oder wenn man nach dem Abtrennen beispielsweise mit einem Fräswerkzeug ringsum entlang der Trennkante die Fase anbringt.

Bei Kunststoffrohren des erfindungsgemäßen Typs ist es vorzugsweise so, dass die Deckschicht verglichen mit der Kernschicht eine geringere Schichtdicke aufweist. Die Stabilität des Rohrs und die gewünschten mechanischen Eigenschaften resultieren aus der Kernschicht. Die Deckschicht besteht vorzugsweise außerdem aus einem Kunststoff mit elastischen Eigenschaften, wodurch auch der Schälvorgang erleichtert wird. Die Deckschicht sollte zudem keinen oder nur einen geringen Haftverbund mit der Kernschicht eingehen.

Als geeignete Kunststoffe kommen erfindungsgemäß insbesondere Polyethylen und Polypropylen in Betracht. Eine mögliche erste Alternative sieht zum Beispiel vor, dass die Kernschicht ein Polyethylen umfasst und mindestens eine Deckschicht ein Polypropylen umfasst. Eine sinnvolle andere Variante, die zum Beispiel für Abwasserrohre besonders geeignet ist, sieht vor, dass die Kernschicht ein Polypropylen umfasst und mindestens eine Deckschicht ein Polyethylen umfasst.

Es können auch zwei oder mehrere Deckschichten vorhanden sein. Ein möglicher Schichtaufbau bei Verwendung von zwei Deckschichten ist zum Beispiel, dass das Kunststoffrohr eine Kernschicht aufweist, die ein Polyethylen umfasst, mindestens eine innere Deckschicht, die ein gegenüber Polyethylen abweisendes Polypropylen umfasst, sowie mindestens eine äußere Deckschicht, die ein auf der inneren Polypropylen-Deckschicht gut haftendes Polypropylen umfasst. Die innere Schutzschicht hat in diesem Fall keinen Haftverbund zur Kernschicht, insbesondere da hier ein Polypropylen verwendet werden kann, welches gegenüber dem Polyethylen der Kernschicht abweisend ist. Für die äußere Deckschicht kann man zum Beispiel ein hochflexibles Polypropylen verwenden, welches eine gute Haftung auf der inneren Polypropylenschicht hat. Vorteilhaft ist bei dieser Variante der Erfindung insbesondere, dass sich durch die Auswahl der Polymeren die Haftung der äußeren Deckschicht auf der inneren Deckschicht einstellen lässt. Es lassen sich so Kunststoffrohre mit unterschiedlichem Materialaufbau herstellen, die jeweils besonders gute Eigenschaften für spezifische Anwendungszwecke aufweisen.

Bevorzugt geeignete Kunststoffkombinationen für die Kernschicht und ein oder mehrere Deckschichten der erfindungsgemäßen Kunststoffrohre sind außerdem die nachfolgend beispielhaft genannten Kombinationen. Es kann eine Kernschicht vorhanden sein, die wenigstens ein Polymeres ausgewählt aus der Gruppe Polyethylen, Polypropylen, Polyvinylchlorid, PVDF (Polyvinyldifluorid), und PB (Polybutylen) enthält. Die Kernschicht kann auch beispielsweise ein Mehrschichtrohr mit wenigstens einer Verstärkungsschicht sein.

Weiterhin umfasst das erfindungsgemäße Kunststoffrohr vorzugweise wenigstens eine Deckschicht oder Schutzschicht, die wenigstens ein Polymeres ausgewählt aus der Gruppe Polyethylen und Polypropylen oder ein Copolymeres aus diesen Verbindungen enthält.

Die in den Unteranspruchen genannten Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Gegenstand der vorliegenden Erfindung ist weiterhin ein Verfahren zur Herstellung eines mehrschichtigen Kunststoffrohrs, bei dem der Sollbruchbereich durch eine Verformung des noch plastischen Kunststoffs der mindestens einen Deckschicht während der Herstellung des Kunststoffrohrs geschaffen wird.

Nachfolgend wird die Erfindung anhand von Ausführungsbeispielen unter Bezugnahme auf die beiliegenden Zeichnungen näher beschrieben. Dabei zeigen:
Figur 1. eine perspektivische Ansicht eines dreischichtigen Rohrs gemäß einer beispielhaften Ausführungsvariante der Erfindung;
Figur 2 eine vergrößerte Darstellung eines Längsschnitts durch die Rohrwandung eines erfindungsgemäßen dreischichtigen Kunststoffrohrs;
Figur 3 eine weitere perspektivische Ansicht des Rohrs gemäß dem Ausführungsbeispiel von Figur 1, während des Abtrennens der Deckschicht.

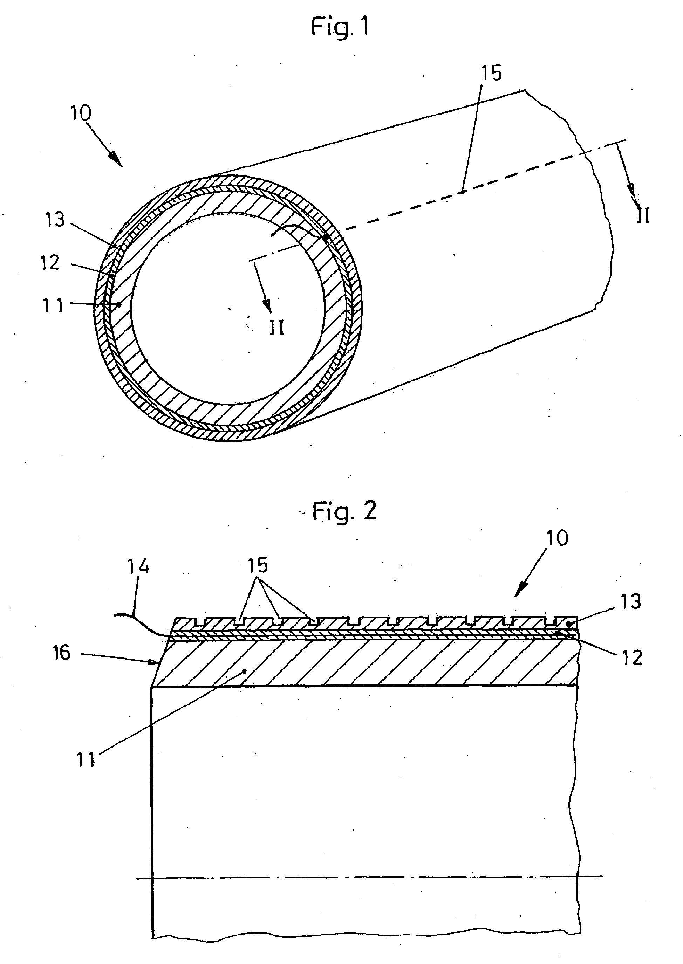

Zunächst wird auf Figur 1 Bezug genommen und anhand dieser der Aufbau eines erfindungsgemäßen Rohrs erläutert. In dem Ausführungsbeispiel ist ein dreischichtiges Kunststoffrohr 10 dargestellt, welches eine Kernschicht 11 umfasst, die zum Beispiel aus einem Polyethylen oder einem Polypropylen besteht. Diese Kernschicht 11 erstreckt sich über den überwiegenden Anteil der Wanddicke des Kunststoffrohrs 10. Die Kernschicht 11 ist zudem die Schicht, die dem Kunststoffrohr 10 die erforderliche Festigkeit verleiht. Auf diese Kernschicht 11 aufgebracht, insbesondere aufextrudiert, ist zunächst eine erste innere Deckschicht 12, deren Aufgabe darin besteht, die Kernschicht 11 gegen Verschmutzung und UV -Einfluss zu schützen. Diese innere Deckschicht 12 besteht beispielsweise aus einem Kunststoff wie Polypropylen, wenn die Kernschicht aus einem Polyethylen besteht, so dass die innere Deckschicht 12 nur eine geringe Adhäsion gegenüber der Kernschicht 11 aufweist. Weiterhin ist noch eine äußere Deckschicht 13 vorhanden, die die innere Deckschicht 12 konzentrisch umgibt und die die äußerste Schicht des dreischichtigen Kunststoffrohrs 10 bildet. Die äußere Deckschicht 13 kann aus einem artverwandten Kunststoff zu dem Kunststoff der inneren Deckschicht 12 bestehen, zum Beispiel ebenfalls aus einem Polypropylen, wenn letztere aus einem Polypropylen besteht.

Um ein bereichsweises Abschälen der beiden Deckschichten 12 und 13 von der Kernschicht 11 zu ermöglichen, ist erfindungsgemäß eine in Längsrichtung des Rohrs 10 verlaufende Sollbruchnaht 15 vorgesehen, die sich durch die beiden Deckschichten 12 und 13 oder zumindest durch einen Teil ihrer Schichtdicke erstreckt. Diese Sollbruchnaht 15 wird beispielsweise von einer Schwächung oder Perforation gebildet, die sich entlang einer Linie erstreckt. Nähere Details hierzu ergeben sich aus der vergrößerten Schnittdarstellung durch die Rohrwandung gemäß Figur 2.

Nachfolgend wird auf Figur 2 Bezug genommen. Aus dieser Längsschnittdarstellung durch die dreischichtige Rohrwand des Kunststoffrohrs 10 kann man erkennen, dass an der Stirnseite des Rohrs eine Fase 16 vorgesehen ist, deren Zweck darin besteht, das Ende eines in die innere Deckschicht 12 eingearbeiteten Fadens 14 besser erreichbar zu machen. Dieser Faden dient als Trennelement, welches das Aufreißen der Deckschichten entlang der in Figur 1 dargestellten Sollbruchnaht 15 vereinfacht. Dadurch, dass die stirnseitige Fase 16 vorhanden ist, tritt das Ende des Fadens 14 aus der Deckschicht aus und kann so erfasst werden. Bei Ausüben einer Zugkraft auf den Faden reißt die Sollbruchnaht 15 auf, so dass anschließend die beiden Deckschichten 12 und 13 in Umfangsrichtung von der Kernschicht 11 abgeschält werden können.

In Figur 2 weiterhin erkennbar ist eine Reihe beabstandeter Vertiefungen in der äußeren Deckschicht 13, die die zuvor genannte Sollbruchnaht 15 bilden. Wie man sieht, erstrecken sich diese Vertiefungen in radialer Richtung nur durch einen Teil der Schichtdicke der äußeren Deckschicht 13, so dass diese nicht vollständig durchtrennt sondern nur geschwächt ist. Diese Schwächung, die beispielsweise durch Eindrücke eines abzurollenden Lochrads in den noch plastischen Kunststoff der Deckschicht bei der Herstellung des Kunststoffrohrs erzielt werden kann, genügt, um die gewünschte linienförmige Sollbruchnaht 15 zu schaffen. Alternativ zu einer in Figur 1 gezeigten Längsnaht 15 kann auch eine spiralförmige Sollbruchnaht in die äußeren Schichten des Rohrs eingebracht werden. Da die äußere Deckschicht 13 eine größere Adhäsion zur inneren Deckschicht 12 hat, die innere Deckschicht jedoch auf der Kernschicht 11 praktisch keine Haftung hat, kann es genügen, wenn sich die Schwächung, die die Sollbruchnaht 15 bildet nur in die äußere Deckschicht 13 hinein erstreckt, wie in Figur 2 gezeigt ist. in jedem Fall sind die Deckschichten 12 un 13 wesentlich dünner als die Kemschicht 11. Die Darstellung in den Zeichnungen deutet dies nur an, die Zeichnungen sind aber nicht als maßstabsgerecht anzusehen hinsichtlich der Schichtdickenverhältnisse. Die Deckschichten oder zumindest die äußere Deckschicht 13 bestehen zudem bevorzugt aus einem elastischen Kunststoff, wodurch auch das Abschälen erleichtert wird, da die abzuschälende Schicht flexibel ist.

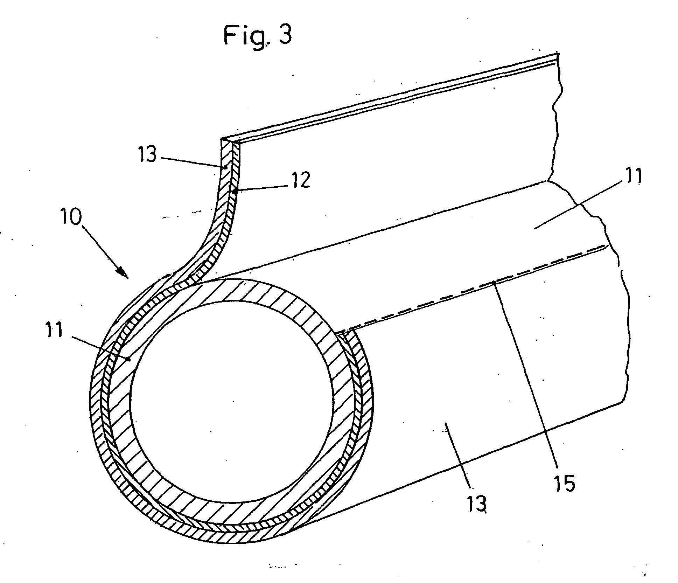

Nachfolgend wird unter Bezugnahme auf Figur 3 der Vorgang des Abschälens der Deckschichten 12 und 13 noch einmal erläutert. Man erkennt, dass die beiden Deckschichten entlang der Sollbruchnaht 15 aufgerissen sind, so dass es danach möglich ist, in einer Abwickelbewegung die beiden untereinander eine Haftung aufweisenden Deckschichten 12 und 13 in Umfangsrichtung von der Kernschicht 11 des Kunststoffrohrs 10 abzuwickeln. Danach liegt in einem Endbereich des Rohrs die äußere Oberfläche der Kernschicht 11 frei, wobei diese, da sie zuvor geschützt war, völlig frei von Verschmutzungen ist. Anschließend kann dann ein Schweißvorgang erfolgen, um das Rohrende dieses Kunststoffrohrs mit einem anderen Kunststoffrohr zwecks Verlängerung zu verbinden.

## Patentansprüche

1. Mehrschichtiges Kunststoffrohr umfassend mindestens eine Kernschicht und mindestens eine Deckschicht, welche dazu bestimmt ist, bei Bedarf in einem Schälvorgang von der mindestens einen Kernschicht entfernt zu werden, wobei mindestens eine Deckschicht (12, 13) wenigstens einen achsparallel ausgerichteten oder spiralförmig um die Rohrachse in Umfangsrichtung verlaufenden Sollbruchbereich (15) aufweist, der ein Abschälen der mindestens einen Deckschicht (12, 13) ermöglicht, und wobei mindestens eine Deckschicht (12, 13) auf die Kernschicht (11) aufextrudiert und/oder aufgeschrumpft oder aufgewickelt ist
**dadurch gekennzeichnet, dass** der Sollbruchbereich (15) eine Lochung oder Perforation der mindestens einen Deckschicht (12, 13) umfasst, wobei der Sollbruchbereich (15) sich in radialer Richtung nur durch einen Teil der Schichtdicke der äußeren Deckschicht erstreckt, wobei der Sollbruchbereich (15) durch eine Reihe beabstandeter Vertiefungen in der äußeren Deckschicht gebildet ist, die eine Sollbruchnaht bilden

2. Mehrschichtiges Kunststoffrohr nach einem der Anspruch 1, **dadurch gekennzeichnet, dass** mindestens ein Trennelement (14) vorgesehen ist, welches als Hilfsmittel für eine erleichterte Entfernung der mindestens einen Deckschicht (12, 13) dient, wobei als Trennelement ein Faden (14) vorgesehen ist, der mindestens teilweise in der Rohrwandung aufgenommen ist, wobei der Faden (14) auf die Kernschicht (11) aufgebracht ist, bevor die Aufbringung der Deckschicht (12, 13) erfolgt.

3. Mehrschichtiges Kunststoffrohr nach einem der Ansprüche 1 oder 2, **dadurch gekennzeichnet, dass** die Deckschicht (12, 13) zur Sichtbarmachung des Trennelements (14) mindestens bereichsweise transparent ausgebildet ist.

4. Mehrschichtiges Kunststoffrohr nach einem der Ansprüche 1 bis 3, **dadurch gekennzeichnet, dass** die mindestens eine Deckschicht (12, 13) eine vergleichsweise geringe Schichtdicke aufweist verglichen mit der Wanddicke der Kernschicht (11)

5. Mehrschichtiges Kunststoffrohr nach einem der Ansprüche 1 bis 4, **dadurch gekennzeichnet, dass** mindestens eine Deckschicht (12, 13) aus einem hochelastischen Kunststoff besteht.

6. Mehrschichtiges Kunststoffrohr nach einem der Ansprüche 1 bis 5, **dadurch gekennzeichnet, dass** dieses mindestens zwei durch einen Schälvorgang mindestens bereichsweise entfernbare Deckschichten (12, 13) aufweist.

7. Mehrschichtiges Kunststoffrohr nach einem der Ansprüche 1 bis 6, **dadurch gekennzeichnet, dass** das Kunststoffrohr stirnseitig mindestens eine Fase (16) aufweist.

8. Mehrschichtiges Kunststoffrohr nach einem der Ansprüche 1 bis 7, **dadurch gekennzeichnet, dass** die Kernschicht (11) ein Polyethylen umfasst und mindestens eine Deckschicht (12, 13) ein Polypropylen umfasst.

9. Mehrschichtiges Kunststoffrohr nach einem der Ansprüche 1 bis 8, **dadurch gekennzeichnet, dass** die Kernschicht (11) ein Polypropylen umfasst und mindestens eine Deckschicht (12, 13) ein Polyethylen umfasst.

10. Mehrschichtiges Kunststoffrohr nach einem der Ansprüche 1 bis 9, **dadurch gekennzeichnet, dass** dieses eine Kernschicht (11) aufweist, die ein Polyethylen umfasst, mindestens eine innere Deckschicht (12), die ein gegenüber Polyethylen abweisendes Polypropylen umfasst, sowie mindestens eine äußere Deckschicht (13), die ein auf der inneren Polypropylen-Deckschicht (12) gut haftendes Polypropylen umfasst.

11. Mehrschichtiges Kunststoffrohr nach einem der Ansprüche 1 bis 10, **dadurch gekennzeichnet, dass** dieses eine Kernschicht (11) umfasst, die wenigstens ein Polymeres ausgewählt aus der Gruppe Polyethylen, Polypropylen, Polyvinylchlorid, PVDF (Polyvinyldifluorid), PB (Polybutylen) enthält.

12. Mehrschichtiges Kunststoffrohr nach einem der Ansprüche 1 bis 11, **dadurch gekennzeichnet, dass** dieses wenigstens eine Deckschicht (12, 13) umfasst, die wenigstens ein Polymeres ausgewählt aus der Gruppe Polyethylen und Polypropylen oder ein Copolymeres aus diesen Verbindungen enthält.

13. Mehrschichtiges Kunststoffrohr nach einem der Ansprüche 1 bis 12, **dadurch gekennzeichnet, dass** dieses wenigstens eine Kernschicht (11) aus einem Mehrschichtrohr mit Verstärkungsschicht aufweist.

14. Mehrschichtiges Kunststoffrohr nach einem der vorhergehenden Ansprüche, **dadurch gekennzeichnet, dass** die wenigstens eine Deckschicht aus einem Kunststoff besteht, der im erkalteten Zustand eine vergleichsweise große Härte aufweist.

15. Verfahren zur Herstellung eines mehrschichtigen Kunststoffrohrs gemäß einem der Ansprüche 1 bis 14, **dadurch gekennzeichnet, dass** der Sollbruchbereich durch eine Verformung des noch plastischen Kunststoffs der mindestens einen Deckschicht während der Herstellung des Kunststoffrohrs geschaffen wird.

## Claims

1. A multilayer plastic pipe, comprising at least one core layer and at least one cover layer that is designed for being removed from the at least one core layer, if so required, by means of a peeling process, wherein at least one cover layer (12, 13) features at least one predetermined breaking area (15) that is aligned axially parallel or circumferentially extends around the pipe axis in a helicoidal fashion and makes it possible to peel off the at least one cover layer (12, 13), and wherein at least one cover layer (12, 13) is extruded and/or shrunk and/or wound onto the core layer (11),
**characterized in that** the predetermined breaking area (15) comprises a punching or perforation of the at least one cover layer (12, 13), wherein the predetermined breaking area (15) radially extends through only part of the layer thickness of the outer cover layer, and wherein the predetermined breaking area (15) is realized in the form of a row of spaced apart depressions in the outer cover layer that form a predetermined breaking seam.

2. The multilayer plastic pipe according to Claim 1, **characterized in that** at least one separating element (14) is provided in order to simplify the removal of the at least one cover layer (12, 13), wherein the separating element is realized in the form of a thread (14) that is at least partially accommodated in the pipe wall, and wherein the thread (14) is placed onto the core layer (11) before the cover layer (12, 13) is applied.

3. The multilayer plastic pipe according to Claim 1 or 2, **characterized in that** the cover layer (12, 13) is at least sectionally realized in a transparent fashion in order to show the separating element (14).

4. The multilayer plastic pipe according to one of Claims 1 to 3, **characterized in that** the at least one cover layer (12, 13) has a relatively small layer thickness in comparison with the wall thickness of the core layer (11).

5. The multilayer plastic pipe according to one of Claims 1 to 4, **characterized in that** the at least one cover layer (12, 13) consist of a highly elastic plastic.

6. The multilayer plastic pipe according to one of Claims 1 to 5, **characterized in that** it features at least two cover layers (12, 13) that can be at least sectionally removed by means of a peeling process.

7. The multilayer plastic pipe according to one of Claims 1 to 6, **characterized in that** the plastic pipe features at least one bevel (16) on its face.

8. The multilayer plastic pipe according to one of Claims 1 to 7, **characterized in that** the core layer (11) comprises a polyethylene and the at least one cover layer (12, 13) comprises a polypropylene.

9. The multilayer plastic pipe according to one of Claims 1 to 8, **characterized in that** the core layer (11) comprises a polypropylene and the at least one cover layer (12, 13) comprises a polyethylene.

10. The multilayer plastic pipe according to one of Claims 1 to 9, **characterized in that** it features a core layer (11) comprising a polyethylene, at least one inner cover layer (12) comprising a polypropylene that is repellent referred to the polyethylene, as well as at least one outer cover layer (13) comprising a polypropylene that adheres well to the inner polypropylene cover layer (12).

11. The multilayer plastic pipe according to one of Claims 1 to 10, **characterized in that** it comprises a core layer (11) containing at least one polymer that is selected from the group consisting of polyethylene, polypropylene, polyvinyl chloride, PVDF (polyvinylidenefluoride) and PB (polybutylene).

12. The multilayer plastic pipe according to one of Claims 1 to 11, **characterized in that** it comprises at least one cover layer (12, 13) containing at least one polymer that is selected from the group consisting of polyethylene and polypropylene or a copolymer thereof.

13. The multilayer plastic pipe according to one of Claims 1 to 12, **characterized in that** it features at least one core layer (11) consisting of a multilayer pipe with a reinforcing layer.

14. The multilayer plastic pipe according to one of the preceding claims, **characterized in that** the at least one cover layer consists of a plastic that has a comparatively high hardness in the cooled state.

15. A method for manufacturing a multilayer plastic pipe according to one of Claims 1 to 14, **characterized in that** the predetermined breaking area is produced by means of a deformation of the plastic of the at least one cover layer while it is still in a plastic state during the manufacture of the plastic pipe.

## Revendications

1. Tuyau en plastique multicouche, comprenant au moins une couche de noyau et au moins une couche de recouvrement qui est destinée à être enlevée en cas de besoin de l'au moins une couche de noyau par épluchage, au moins une couche de recouvrement (12, 13) présentant au moins une zone de rupture théorique (15) orientée parallèlement à l'axe ou en spirale autour de l'axe du tuyau dans le sens circonférentiel et qui permet d'éplucher l'au moins une couche (12, 13) et au moins une couche de recouvrement (12, 13) étant extrudée et/ou rétractée et/ou enroulée sur la couche de noyau (11),
**caractérisé en ce que** la zone de rupture théorique (15) comprend un trou ou une perforation de l'au moins une couche de recouvrement (12, 13), la zone de rupture théorique (15) s'étend dans le sens radial seulement sur une partie de l'épaisseur de couche de la couche de recouvrement extérieure, la zone de rupture théorique (15) étant constituée par une série de creux espacés dans la couche de recouvrement extérieure et qui forment un cordon de rupture théorique.

2. Tuyau en plastique multicouche selon la revendication 1, **caractérisé en ce qu'**il est prévu au moins un élément séparateur (14) qui sert d'auxiliaire pour enlever plus facilement l'au moins une couche de recouvrement (12, 13), étant prévu comme élément séparateur un fil (14) qui est reçu au moins partiellement dans la paroi du tuyau, le fil (14) étant appliqué sur la couche de noyau (11) avant qu'ait lieu l'application de la couche de recouvrement (12, 13) .

3. Tuyau en plastique multicouche selon une des revendications 1 ou 2, **caractérisé en ce que** la couche de recouvrement (12, 13), pour rendre l'élément séparateur (14) visible, est de conformation transparente, du moins par endroits.

4. Tuyau en plastique multicouche selon une des revendications 1 à 3, **caractérisé en ce que** l'au moins une couche de recouvrement (12, 13) présente une épaisseur de couche relativement faible par rapport à l'épaisseur de paroi de la couche de noyau (11).

5. Tuyau en plastique multicouche selon une des revendications 1 à 4, **caractérisé en ce qu'**au moins une couche de recouvrement (12, 13) est composée d'un plastique très élastique.

6. Tuyau en plastique multicouche selon une des revendications 1 à 5, **caractérisé en ce que** celui-ci présente au moins deux couches de recouvrement (12, 13) pouvant être enlevées au moins par endroits par épluchage.

7. Tuyau en plastique multicouche selon une des revendications 1 à 6, **caractérisé en ce que** le tuyau en plastique présente sur sa face frontale au moins un biseau (16).

8. Tuyau en plastique multicouche selon une des revendications 1 à 7, **caractérisé en ce que** la couche de noyau (11) comprend un polyéthylène et au moins une couche de recouvrement (12, 13) un polypropylène.

9. Tuyau en plastique multicouche selon une des revendications 1 à 8, **caractérisé en ce que** la couche de noyau (11) comprend un polypropylène et au moins une couche de recouvrement (12, 13) un polyéthylène.

10. Tuyau en plastique multicouche selon une des revendications 1 à 9, **caractérisé en ce que** celui-ci présente une couche de noyau (11) qui comprend un polyéthylène, au moins une couche de recouvrement intérieure (12) qui comprend un polypropylène repoussant le polyéthylène, de même qu'au moins une couche de recouvrement extérieure (13) qui comprend un polypropylène adhérant bien sur la couche de recouvrement intérieure en polypropylène (12).

11. Tuyau en plastique multicouche selon une des revendications 1 à 10, **caractérisé en ce que** celui-ci présente une couche de noyau (11) qui contient au moins un polymère sélectionné dans le groupe composé du polyéthylène, du polypropylène, du chlorure de polyvinyle, du PVDF (difluorure de polyvinyle), du PB (polybutylène).

12. Tuyau en plastique multicouche selon une des revendications 1 à 11, **caractérisé en ce que** celui-ci comprend au moins une couche de recouvrement (12, 13) qui contient au moins un polymère sélectionné dans le groupe composé du polyéthylène et du polypropylène ou un copolymère de ces composés.

13. Tuyau en plastique multicouche selon une des revendications 1 à 12, **caractérisé en ce que** celui-ci présente au moins une couche de noyau (11) faite d'un tuyau multicouche doté d'une couche de renfort.

14. Tuyau en plastique multicouche selon une des revendications précédentes, **caractérisé en ce que** l'au moins une couche de recouvrement est composée d'un plastique qui, à l'état refroidi, a une dureté comparativement élevée.

15. Procédé de fabrication d'un tuyau en plastique multicouche selon une des revendications 1 à 14, **caractérisé en ce que** la zone de rupture théorique est créée par déformation du plastique encore malléable de l'au moins une couche de recouvrement pendant la fabrication du tuyau en plastique.
